(19) Europäisches Patentamt / European Patent Office / Office européen des brevets

(11) **EP 3 435 332 A1**

(12) **DEMANDE DE BREVET EUROPEEN**

(43) Date de publication:
**30.01.2019 Bulletin 2019/05**

(51) Int Cl.:
***G06T 7/579*** *(2017.01)*

(21) Numéro de dépôt: **18185552.9**

(22) Date de dépôt: **25.07.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **25.07.2017 FR 1757049**

(71) Demandeur: **Parrot Drones
75010 Paris (FR)**

(72) Inventeur: **PINARD, Clément
75011 PARIS (FR)**

(74) Mandataire: **Lavoix
2, place d'Estienne d'Orves
75441 Paris Cedex 09 (FR)**

(54) **DISPOSITIF ÉLECTRONIQUE ET PROCÉDÉ DE GÉNÉRATION, À PARTIR D'AU MOINS UNE PAIRE D'IMAGES SUCCESSIVES D'UNE SCÈNE, D'UNE CARTE DE PROFONDEUR DE LA SCÈNE, DRONE ET PROGRAMME D'ORDINATEUR ASSOCIÉS**

(57)     Ce dispositif électronique (14) de génération, à partir d'une paire d'images successives d'une scène comportant un ensemble d'objet(s), d'une carte de profondeur de la scène, comprend :
- un module (24) d'acquisition d'une paire d'images de la scène, prises par un capteur (12),
- un module (26) de calcul via un réseau de neurones d'une carte intermédiaire de profondeur, chaque carte intermédiaire étant calculée pour une paire respective d'images acquise et présentant une valeur indicative d'une profondeur pour chaque objet de la scène, une variable d'entrée du réseau de neurones étant la paire d'images acquise, une variable de sortie du réseau de neurones étant la carte intermédiaire, et
- un module (36) de génération de la carte de profondeur de la scène à partir d'au moins une carte intermédiaire calculée.

FIG.1

EP 3 435 332 A1

**Description**

La présente invention concerne un dispositif électronique de génération, à partir d'au moins une paire d'images successives d'une scène comportant un ensemble d'objet(s), d'une carte de profondeur de la scène.

L'invention concerne également un drone comprenant un capteur d'images configuré pour prendre au moins une paire d'images successives de la scène et un tel dispositif électronique de génération de la carte de profondeur de la scène.

L'invention concerne également un procédé de génération, à partir d'au moins une paire d'images successives d'une scène comportant un ensemble d'objet(s), d'une carte de profondeur de la scène, le procédé étant mis en oeuvre par un tel dispositif électronique de génération.

L'invention concerne également un programme d'ordinateur comportant des instructions logicielles qui, lorsqu'elles sont exécutées par un ordinateur, mettent en oeuvre un tel procédé de génération.

L'invention concerne le domaine des drones, c'est-à-dire des appareils motorisés volants pilotés à distance. L'invention s'applique notamment aux drones à voilure tournante, tels que les quadricoptères, tout en s'appliquant également à d'autres types de drones, par exemple les drones à voilure fixe.

L'invention est particulièrement utile lorsque le drone est dans un mode de poursuite dans le but de suivre une cible donnée, telle que le pilote du drone pratiquant une activité sportive, et qu'il doit alors être capable de détecter des obstacles se trouvant éventuellement sur sa trajectoire ou à proximité.

L'invention offre alors de nombreuses applications, en particulier pour une détection améliorée d'obstacles.

Pour la détection d'obstacle par un drone, on connait un drone équipé d'un dispositif de télédétection par laser ou dispositif LIDAR (de l'anglais *Light Detection And Ranging*) ou encore dispositif LADAR (de l'anglais *LAser Detection And Ranging*). On connait également un drone équipé d'une caméra fonctionnant sur le principe du temps de vol ou caméra TOF (de l'anglais *Time Of Flight*). Pour ce faire, la caméra TOF illumine les objets de la scène par un éclair de lumière, et calcule le temps que cet éclair prend pour effectuer le trajet entre l'objet et la caméra. On connait également un drone équipé d'une caméra stéréoscopique, telle qu'une caméra SLAM (de l'anglais *Simultaneous Localization And Mapping*).

Lorsque le drone est équipé d'une caméra monoculaire, la détection est plus délicate, et il est alors généralement connu d'utiliser le mouvement de la caméra, et en particulier la structure du mouvement. D'autres techniques, par exemple SLAM, sont utilisées avec des mouvements non structurés, produisent des cartes tridimensionnelles très approximatives et nécessitent des calculs importants pour garder une trace de la structure de la scène et aligner des points nouvellement détectés sur des points existants.

Toutefois, une telle détection d'obstacle avec une caméra monoculaire n'est pas très efficace.

Le but de l'invention est alors de proposer un dispositif électronique et un procédé associé qui permettent de générer plus efficacement une carte de profondeur de la scène, à partir d'au moins une paire d'images successives d'une scène.

A cet effet, l'invention a pour objet un dispositif électronique de génération, à partir d'au moins une paire d'images successives d'une scène comportant un ensemble d'objet(s), d'une carte de profondeur de la scène, le dispositif comprenant :

- un module d'acquisition configuré pour acquérir au moins une paire d'images successives, prises par un capteur d'images, de la scène comportant l'ensemble d'objet(s),
- un module de calcul configuré pour calculer via un réseau de neurones au moins une carte intermédiaire de profondeur, chaque carte intermédiaire étant calculée pour une paire respective d'images acquise et présentant une valeur indicative d'une profondeur pour chaque objet de la scène, la profondeur étant la distance entre le capteur et un plan passant par l'objet respectif, parallèle à un plan de référence du capteur, une variable d'entrée du réseau de neurones étant la paire d'images acquise, une variable de sortie du réseau de neurones étant la carte intermédiaire,
- un module de génération configuré pour générer la carte de profondeur de la scène à partir d'au moins une carte intermédiaire calculée, la carte de profondeur comportant un ensemble d'élément(s), chaque élément étant associé à un objet et ayant une valeur dépendant de la profondeur entre le capteur et ledit objet.

Suivant d'autres aspects avantageux de l'invention, le dispositif électronique de génération comprend une ou plusieurs des caractéristiques suivantes, prises isolément ou suivant toutes les combinaisons techniquement possibles :

- le module de calcul est configuré pour calculer au moins deux cartes intermédiaires pour la même scène ;
- le module de calcul est configuré en outre pour modifier une moyenne des valeurs indicatives de profondeur entre des première et deuxième cartes intermédiaires, calculées respectivement pour des première et deuxième paires d'images acquises, en sélectionnant la deuxième paire avec un écart temporel entre les images modifié par rapport à celui de la première paire ;

- le module de calcul est configuré pour calculer au moins deux cartes intermédiaires pour la même scène, les cartes intermédiaires calculées ayant des moyennes respectives de valeurs indicatives de profondeur qui sont distinctes d'une carte intermédiaire à l'autre, et en outre pour calculer une carte intermédiaire fusionnée en effectuant une somme pondérée des cartes intermédiaires calculées, et le module de génération est configuré pour générer la carte de profondeur à partir de la carte intermédiaire fusionnée ;
- le module de calcul est configuré pour effectuer un partitionnement en k-moyennes sur une carte intermédiaire calculée, afin de déterminer n moyennes respectives distinctes souhaitées pour un calcul ultérieur de n cartes intermédiaires, n étant un entier supérieur ou égal à 2 ;
- le module de génération est configuré pour générer la carte de profondeur en appliquant un facteur correctif d'échelle à la ou chaque carte intermédiaire calculée, le facteur correctif d'échelle dépendant d'un ratio entre l'écart temporel entre les images de la paire acquise pour laquelle la carte intermédiaire a été calculée et un écart temporel prédéfini, utilisé pour un apprentissage préalable du réseau de neurones ;
- chaque élément de la carte de profondeur est un pixel, et chaque objet est l'entité de la scène correspondant au pixel de l'image prise ; et
- le capteur d'image s'étend suivant un plan d'extension, et le plan de référence est un plan parallèle au plan d'extension, tel qu'un plan confondu avec le plan d'extension.

L'invention a également pour objet un drone comprenant un capteur d'images configuré pour prendre au moins une paire d'images successives d'une scène comportant un ensemble d'objet(s), et un dispositif électronique de génération configuré pour générer une carte de profondeur de la scène, à partir de l'au moins une paire d'images successives de la scène prises par le capteur, dans lequel le dispositif électronique de génération est tel que défini ci-dessus.

L'invention a également pour objet un procédé de génération, à partir d'au moins une paire d'images successives d'une scène comportant un ensemble d'objet(s), d'une carte de profondeur de la scène, le procédé étant mis en oeuvre par un dispositif électronique de génération, et comprenant :

- l'acquisition d'au moins une paire d'images successives, prises par un capteur d'images, de la scène comportant l'ensemble d'objet(s),
- le calcul via un réseau de neurones d'au moins une carte intermédiaire de profondeur, chaque carte intermédiaire étant calculée pour une paire respective d'images acquise et présentant une valeur indicative d'une profondeur pour chaque objet de la scène, la profondeur étant la distance entre le capteur et un plan passant par l'objet respectif parallèlement à un plan de référence du capteur, une variable d'entrée du réseau de neurones étant la paire d'images acquise, une variable de sortie du réseau de neurones étant la carte intermédiaire, et
- la génération de la carte de profondeur de la scène à partir d'au moins une carte intermédiaire calculée, la carte de profondeur comportant un ensemble d'élément(s), chaque élément étant associé à un objet et ayant une valeur dépendant de la profondeur entre le capteur et ledit objet.

L'invention a également pour objet un programme d'ordinateur comportant des instructions logicielles qui, lorsqu'elles sont exécutées par un ordinateur, mettent en oeuvre un procédé de génération tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- la figure 1 est une représentation schématique d'un drone comprenant au moins un capteur d'images et un dispositif électronique de génération, à partir d'au moins une paire d'images successives d'une scène comportant un ensemble d'objet(s), d'une carte de profondeur de la scène ;
- la figure 2 est une représentation d'un réseau de neurones artificiels mis en oeuvre par un module de calcul inclus dans le dispositif de génération de la figure 1 ;
- la figure 3 est un schéma-bloc du dispositif de génération de la figure 1, selon un complément facultatif de l'invention avec le calcul d'une carte intermédiaire fusionnée ;
- la figure 4 est un organigramme d'un procédé de génération, à partir d'au moins une paire d'images successives d'une scène comportant un ensemble d'objet(s), d'une carte de profondeur de la scène, selon l'invention ;
- la figure 5 est une courbe représentant une erreur moyenne de profondeur en fonction d'une distance en pixels dans la carte de profondeur à partir d'un foyer d'expansion ;

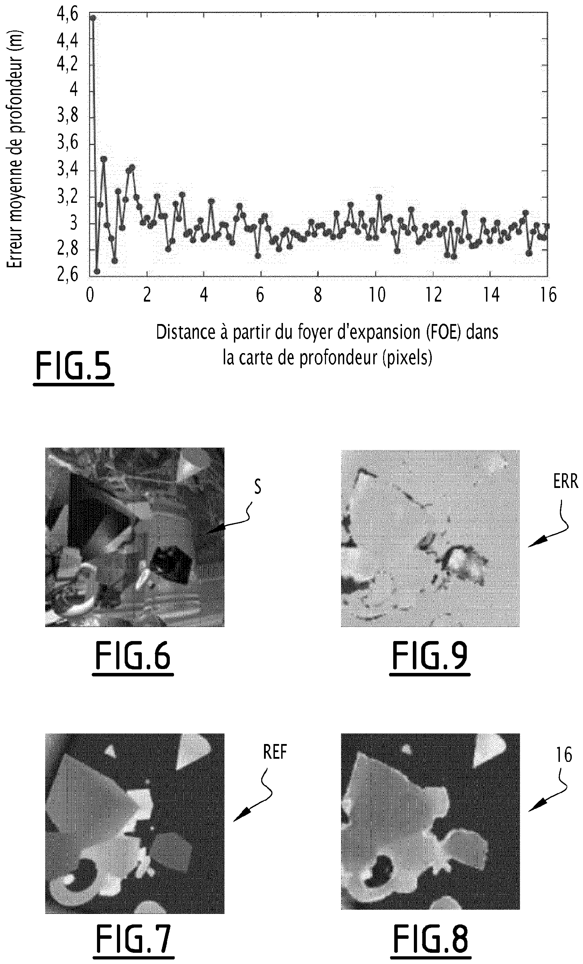

- les figures 6 à 9 sont des images illustrant les résultats obtenus par le dispositif électronique de génération selon l'invention en comparaison avec un calcul de référence de la carte de profondeur de la scène, la figure 6 représentant une image de la scène, la figure 7 représentant la carte de profondeur de la scène obtenue avec le calcul de référence, la figure 8 représentant la carte de profondeur de la scène obtenue avec le dispositif de génération selon l'invention et la figure 9 représentant les erreurs de profondeur entre la carte de profondeur obtenue avec le dispositif de génération selon l'invention et celle obtenue avec le calcul de référence ; et

- les figures 10 à 13 sont des images illustrant le calcul d'une carte intermédiaire fusionnée, la figure 10 représentant une image de la scène, la figure 11 représentant une première carte intermédiaire de profondeur, la figure 12 représentant une deuxième carte intermédiaire de profondeur et la figure 13 représentant la carte intermédiaire fusionnée résultant de la fusion des première et deuxième cartes intermédiaires de profondeur.

Dans la suite de la description, l'expression « sensiblement égal(e) à » définit une relation d'égalité à plus ou moins 10 %.

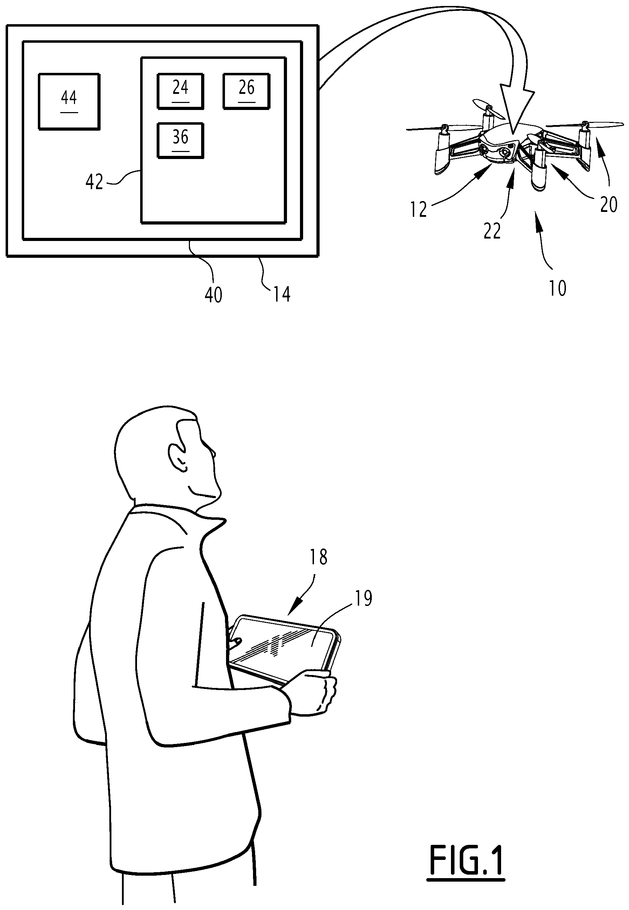

Sur la figure 1, un drone 10, c'est-à-dire un aéronef sans pilote à bord, comprend un capteur d'images 12 configuré pour prendre au moins une paire d'images successives d'une scène S comportant un ensemble d'objet(s), et un dispositif électronique de génération 14 configuré pour générer une carte de profondeur 16 de la scène S, à partir d'au moins une paire d'images successives $I_{t-\Delta t}$, $I_t$ de la scène S prises par le capteur 12.

Le drone 10 est un engin volant motorisé pilotable à distance, notamment via une manette 18 équipée d'un écran d'affichage 19.

Le drone 10 est par exemple un drone à voilure tournante, comportant au moins un rotor 20. Sur la figure 1, le drone comporte une pluralité de rotors 20, et est alors appelé drone multirotor. Le nombre de rotors 20 est en particulier égal à 4 dans cet exemple, et le drone 10 est alors un drone quadrirotor. En variante, non représentée, le drone 10 est un drone à voilure fixe.

Le drone 10 comporte un module de transmission 22 configuré pour échanger des données, de préférence par ondes radioélectriques, avec un ou plusieurs équipements électroniques, notamment avec la manette 18, voire avec d'autres éléments électroniques pour la transmission de la ou des images acquises par le capteur d'image 12.

Le capteur d'image 12 est par exemple une caméra à visée frontale permettant d'obtenir une image de la scène vers laquelle est orienté le drone 10. En variante ou en complément, le capteur d'image 12 est une caméra à visée verticale, non représentée, pointant vers le bas et configurée pour capter des images successives d'un terrain survolé par le drone 10.

Le capteur d'image 12 s'étend suivant un plan d'extension. Le capteur d'image 12 comprend par exemple un photodétecteur matriciel comportant une pluralité de photosites, chaque photosite correspondant à un pixel respectif de l'image prise par le capteur 12. Le plan d'extension correspond alors au plan du photodétecteur matriciel.

Le dispositif électronique de génération 14 est par exemple embarqué à bord du drone 10, comme représenté sur la figure 1.

En variante, le dispositif électronique de génération 14 est un dispositif électronique distinct et distant du drone 10, le dispositif électronique de génération 14 étant alors adapté pour communiquer avec le drone 10, en particulier avec le capteur d'images 12, via le module de transmission 22 embarqué à bord du drone 10.

Le dispositif électronique de génération 14 comprend un module d'acquisition 24 configuré pour acquérir au moins une paire d'images successives $I_{t-\Delta t}$, $I_t$ de la scène S, prises par le capteur d'images 12. Les images successives $I_{t-\Delta t}$, $I_t$ acquises ont été prises aux instants temporels respectifs $t-\Delta t$ et $t$, $t$ représentant l'instant temporel auquel a été prise la dernière image acquise de la paire et $\Delta t$ représentant l'écart temporel entre les instants respectifs auxquels ont été prises les deux images acquises de la paire.

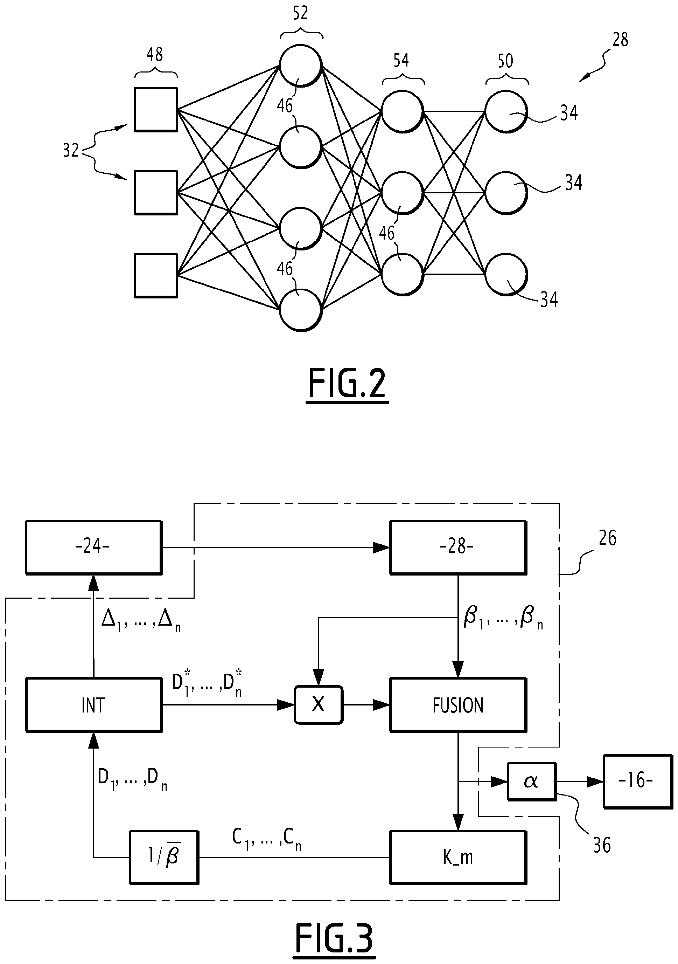

Le dispositif électronique de génération 14 comprend un module de calcul 26 configuré pour calculer via un réseau de neurones 28 au moins une carte intermédiaire de profondeur 30, chaque carte intermédiaire 30 étant calculée pour une paire respective d'images $I_{t-\Delta t}$, $I_t$ acquise et présentant une valeur indicative d'une profondeur pour chaque objet de la scène S. Une variable d'entrée 32 du réseau de neurones 28 est la paire d'images $I_{t-\Delta t}$, $I_t$ acquise, et une variable de sortie 34 du réseau de neurones 28 est la carte intermédiaire 30, comme représenté sur la figure 2

La profondeur est la distance entre le capteur 12 et un plan passant par l'objet respectif, parallèle à un plan de référence du capteur 12. Le plan de référence est un plan parallèle au plan d'extension du capteur 12, tel qu'un plan confondu avec le plan d'extension du capteur 12. La profondeur est alors de préférence la distance entre le plan du photodétecteur matriciel du capteur 12 et un plan passant par l'objet respectif, parallèlement au plan de référence du capteur 12.

Le dispositif électronique de génération 14 comprend un module de génération 36 configuré pour générer la carte de profondeur 16 de la scène S à partir d'au moins une carte intermédiaire 30 calculée.

Dans l'exemple de la figure 1, le dispositif électronique de génération 14 comporte une unité de traitement d'informations 40, formée par exemple d'une mémoire 42 et d'un processeur 44, tel qu'un processeur de type GPU (de l'anglais *Graphics Processing Unit*), ou de type VPU (de l'anglais *Vision Processing Unit*), associé à la mémoire 42.

La carte de profondeur 16 de la scène S comporte un ensemble d'élément(s), chaque élément étant associé à un objet et ayant une valeur dépendant de la profondeur entre le capteur 12 et ledit objet. Chaque élément de la carte de profondeur 16 est par exemple un pixel, et chaque objet est l'entité de la scène correspondant au pixel de l'image prise. La valeur dépendant de la profondeur entre le capteur 12 et ledit objet, représentée sur la carte de profondeur 16, ainsi que sur chaque intermédiaire 30, est par exemple un niveau de gris ou une valeur RGB, correspondant typiquement à un pourcentage d'une valeur maximale de profondeur, ce pourcentage donnant alors une correspondance avec la valeur de la profondeur ainsi représentée.

La manette 18 est connue en soi, et permet de piloter le drone 10. Dans l'exemple de la figure 1, la manette 18 est mise en oeuvre via un ordiphone (de l'anglais *smartphone*) ou une tablette électronique, comportant l'écran d'affichage 19, de préférence tactile. En variante, non représentée, la manette 18 comprend deux poignées de préhension, chacune étant destinée à être saisie par une main respective du pilote, une pluralité d'organes de commande, dont deux manches à balai (de l'anglais *joystick*), chacun étant disposé à proximité d'une poignée de préhension respective et étant destiné à être actionné par le pilote, de préférence par un pouce respectif.

La manette 18 comprend une antenne radioélectrique et un émetteur-récepteur radioélectrique, non représentés, pour l'échange de données par ondes radioélectriques avec le drone 10, à la fois en liaison montante et en liaison descendante.

Dans l'exemple de la figure 1, le module d'acquisition 24, le module de calcul 26 et le module de génération 36 sont réalisés chacun sous forme d'un logiciel exécutable par le processeur 44. La mémoire 42 de l'unité de traitement d'informations 40 est alors apte à stocker un logiciel d'acquisition configuré pour acquérir au moins une paire d'images successives $I_{t-\Delta t}$, $I_t$ de la scène S, prises par le capteur d'images 12, un logiciel de calcul configuré pour calculer via le réseau de neurones 28 l'au moins une carte intermédiaire de profondeur 30 et un logiciel de génération configuré pour générer la carte de profondeur 16 de la scène S à partir de l'au moins une carte intermédiaire 30 calculée. Le processeur 44 de l'unité de traitement d'informations 40 est alors apte à exécuter le logiciel d'acquisition, le logiciel de calcul et le logiciel de génération.

En variante non représentée, le module d'acquisition 24, le module de calcul 26 et le module de génération 36 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Applications Specific Integrated Circuit*).

Le module de calcul 26 est configuré pour calculer via le réseau de neurones 28 l'au moins une carte intermédiaire de profondeur 30.

En complément facultatif, le module de calcul 26 est configuré pour calculer au moins deux cartes intermédiaires 30 pour la même scène S.

En complément facultatif encore, le module de calcul 26 est configuré en outre pour modifier une moyenne des valeurs indicatives de profondeur entre des première et deuxième cartes intermédiaires 30, calculées respectivement pour des première et deuxième paires d'images acquises, en sélectionnant la deuxième paire, également appelée paire suivante, ou encore prochaine paire, avec un écart temporel $\Delta_{t+1}$ entre les images modifié par rapport à celui $\Delta_t$ de la première paire, également appelée paire précédente.

Selon ce complément facultatif, le module de calcul 26 est par exemple configuré pour calculer un déplacement optimal $D_{optimal}(t+1)$ pour la prochaine paire d'images acquises à partir d'une valeur moyenne cible de profondeur $\overline{\beta}$. Ce déplacement optimal $D_{optimal}(t+1)$ est également appelé déplacement souhaité, ou encore déplacement cible.

Le déplacement optimal $D_{optimal}(t+1)$ est par exemple calculé à l'aide des équations suivantes :

$$D_{optimal}(t+1) = \frac{E(\varsigma(t))}{\alpha.\overline{\beta}} \qquad (1)$$

où $E(\varsigma(t))$ est la moyenne des valeurs de la première carte intermédiaire 30, c'est-à-dire de la carte intermédiaire précédente à partir de laquelle le déplacement cible, puis l'écart temporel, est recalculé pour la prochaine paire d'images acquises,

$\overline{\beta}$ est la valeur moyenne cible de profondeur, et

a est un paramètre sans dimension reliant la profondeur au déplacement du capteur 12 ;

$$\alpha = \frac{D_{max}}{D_0} \qquad (2)$$

où $D_{max}$ représente un déplacement maximal du capteur 12 entre deux prises d'image successives, et

$D_0$ représente un déplacement de référence utilisé lors d'un apprentissage du réseau de neurone 28.

La valeur moyenne cible de profondeur $\overline{\beta}$ est de préférence prédéfinie, et par exemple sensiblement égale à 0,5.

En complément facultatif encore, le module de calcul 26 est configuré pour calculer au moins deux cartes intermédiaires 30 pour la même scène S, les cartes intermédiaires calculées 30 ayant des moyennes respectives de valeurs indicatives de profondeur qui sont distinctes d'une carte intermédiaire 30 à l'autre. Selon ce complément facultatif, le module de calcul 26 est configuré en outre pour calculer une carte intermédiaire fusionnée 45 en effectuant une somme pondérée des cartes intermédiaires 30 calculées. Selon ce complément facultatif, le module de génération 36 est alors configuré pour générer la carte de profondeur 16 à partir de la carte intermédiaire fusionnée 45.

Selon ce complément facultatif, le module de calcul 26 est par exemple configuré en outre pour effectuer un partitionnement en k-moyennes sur une carte intermédiaire calculée 30, afin de déterminer n moyennes respectives distinctes souhaitées pour un calcul ultérieur de n cartes intermédiaires, n étant un entier supérieur ou égal à 2.

Dans l'exemple de la figure 3 représentant un schéma-bloc du dispositif électronique de génération 14 selon ce complément facultatif, le partitionnement de la carte intermédiaire 30 en k-moyennes est effectué par un bloc K_m du module de calcul 26, délivrant en sortie les n moyennes respectives distinctes souhaitées, telles que n centroïdes $C_1, ..., C_n$ de la carte intermédiaire 30 précédemment calculée.

Sur la figure 3, le module de calcul 26 comporte, en sortie du bloc K_m, un bloc $1/\overline{\beta}$ configuré pour calculer des déplacements optimaux $D_1, ..., D_n$ à partir des centroïdes $C_1, ..., C_n$ issus du bloc K_m et d'une valeur moyenne cible de profondeur $\overline{\beta}$. Ces déplacements optimaux $D_1, ..., D_n$ sont également appelés déplacements souhaités, ou encore déplacements cibles.

Chaque déplacement optimal $D_i$, où i est un indice entier compris entre 1 et n représentant le numéro de la moyenne respective correspondante, ou du centroïde correspondant, est par exemple calculé à l'aide des équations suivantes :

$$D_i = \frac{E(\varsigma_i(t))}{\alpha.\overline{\beta}} \qquad (3)$$

où $E(\varsigma_i(t))$ est la moyenne des valeurs de la carte de profondeur partitionnée $\varsigma_i(t)$ d'indice i,
$\overline{\beta}$ est la valeur moyenne cible de profondeur, et
a est le paramètre sans dimension défini par l'équation (2) précédente.

Sur la figure 3, le module de calcul 26 comporte, en sortie du bloc $1/\overline{\beta}$, un bloc INT configuré pour effectuer une intégration des déplacements optimaux $D_1, ..., D_n$ afin d'en déduire pour chacun des centroïdes $C_1, ..., C_n$, d'une part, une valeur respective de déplacement $D^*_1, ..., D^*_n$ entre les deux images de la paire d'images successives $I_{t-\Delta t}, I_t$ de la scène S, et d'autre part, un décalage temporel recalculé $\Delta_1, ..., \Delta_n$, correspondant, fourni au module d'acquisition 24 afin d'effectuer une nouvelle d'acquisition de paires d'images successives $(I_{t\_\Delta 1}, I_t), ..., (I_{t-An}, I_t)$ avec ces décalages temporels recalculés $\Delta_1, ..., \Delta_n$.

Chaque déplacement $D^*_i$ est par exemple calculé à l'aide de l'équation suivante :

$$D_i^* = D(t, \Delta_i) = \left\| \int_{t-\Delta_i}^{t} V(\tau) \cdot d\tau \right\| \qquad (4)$$

où V représente la vitesse du capteur 12 entre les instants temporels $t-\Delta_i$ et t.

La vitesse du capteur 12 est typiquement déduite de celle du drone 10, qui est obtenue via un dispositif de mesure ou capteur de vitesse, connu en soi.

Sur la figure 3, le module de calcul 26 comporte alors, en sortie du bloc INT et du réseau de neurones 28, un bloc multiplicateur, représenté par le symbole « X », configuré pour recalculer les cartes de profondeur $\varsigma_i(t)$ correspondantes pour chaque partitionnement d'indice i initialement effectué et suite à la nouvelle d'acquisition de paires d'images successives $(I_{t-\Delta 1}, I_t), ..., (I_{t-\Delta n}, I_t)$ avec ces décalages temporels recalculés $\Delta_1, ..., \Delta_n$.

Chaque carte de profondeur partitionnée $\varsigma_i(t)$ vérifie par exemple l'équation suivante :

$$\varsigma_i(t) = NN(I_{t-\Delta_i}, I_t) \cdot \frac{D_i^*}{D_0} \qquad (5)$$

où $NN(I_{t-\Delta_i}, I_t)$ représente la nouvelle carte intermédiaire 30 issue du réseau de neurones 28 pour la paire d'images successives $(I_{t-\Delta_i}, I_t)$,

$D^*_i$ représente le déplacement calculé par le bloc INT, par exemple suivant l'équation (4), et

$D_0$ représente le déplacement de référence utilisé lors de l'apprentissage du réseau de neurone 28.

L'équation (4) précitée s'écrit également sous la forme :

$$\varsigma_i(t) = \alpha \cdot \beta(I_{t-\Delta_i}, I_t) \cdot D^*_i \qquad (6)$$

où $\alpha$ est le paramètre sans dimension défini par l'équation (2) précitée,

$D^*_i$ représente le déplacement calculé par le bloc INT, et

$\beta(I_{t-\Delta_i}, I_t)$ vérifie l'équation suivante :

$$\beta(I_{t-\Delta_i}, I_t) = \frac{NN(I_{t-\Delta_i}, I_t)}{D_{max}} \qquad (7)$$

avec $NN(I_{t-\Delta_i}, I_t)$ représentant la nouvelle carte intermédiaire 30 issue du réseau de neurones 28 pour la paire d'images successives ($I_{t-\Delta_i}$, $I_t$) et $D_{max}$ représentant le déplacement maximal du capteur 12 entre deux prises d'image successives.

Sur la figure 3, le module de calcul 26 comporte enfin, en sortie du réseau de neurones 28 et du bloc multiplicateur « X », un bloc FUSION configuré pour calculer la carte intermédiaire fusionnée 45 en effectuant une somme pondérée des cartes intermédiaires 30 calculées, en particulier des cartes de profondeur partitionnées $\varsigma_i(t)$.

La somme pondérée est de préférence une moyenne pondérée dont la somme des poids est égale à 1.

La somme pondérée, telle que la moyenne pondérée, est par exemple effectuée pixel à pixel où, pour chaque pixel de la carte intermédiaire fusionnée 45, un ensemble de poids est calculé.

Le calcul de la carte intermédiaire fusionnée 45 vérifie par exemple les équations suivantes :

$$\omega_{i,j,k} = \varepsilon + f(\beta(I_{t-\Delta_i}, I_t)) \qquad (8)$$

où la fonction f est définie par :

$$f : x \mapsto \begin{cases} 0 & si \quad x < \beta_{min} \\ \dfrac{x - \beta_{min}}{\overline{\beta} - \beta_{min}} & si \quad \beta_{min} \le x < \overline{\beta} \\ \dfrac{\beta_{max} - x}{\beta_{max} - \overline{\beta}} & si \quad \overline{\beta} \le x < \beta_{max} \\ 0 & si \quad x \ge \beta_{max} \end{cases} \qquad (9)$$

$$\varsigma_{FUSION}(t)_{j,k} = \frac{\sum_i \omega_{i,jk,k} \cdot \varsigma_i(t)_{j,k}}{\sum_i \omega_{i,jk,k}} \qquad (10)$$

où $\varsigma_{FUSION}(t)$ désigne la carte intermédiaire fusionnée 45,

i est l'indice entier compris entre 1 et n, défini ci-dessus, j et k sont des indices en abscisse et en ordonnée définissant le pixel de la carte considérée, et

$\varepsilon$, $\beta_{min}$ et $\beta_{max}$ sont des paramètres prédéfinis.

Ces paramètres, ainsi que la valeur moyenne cible de profondeur $\overline{\beta}$, sont de préférence prédéfinis, avec des valeurs par exemple sensiblement égales aux valeurs suivantes :

$\varepsilon = 10^{-3}$; $\beta_{min} = 0,1$; $\overline{\beta} = 0,4$ et $\beta_{max} = 0,9$.

L'homme du métier observera que les équations (2), (5) à (7) dépendent de ratios de distances et que le paramètre sans dimension $\alpha$ et la carte de profondeur partitionnée $\varsigma_i(t)$ vérifient alternativement les équations suivantes dépendant de ratios de vitesses au lieu de ratios de distances, étant supposé que la vitesse du capteur d'images 12 est constante entre deux prises d'image successives :

$$\alpha' = \frac{V_{max}}{V_0} \qquad (11)$$

où $V_{max}$ représente une vitesse maximale du capteur 12, et
$V_0$ représente une vitesse de référence utilisée lors de l'apprentissage du réseau de neurone 28.

$$\varsigma_i(t) = NN(I_{t-\Delta_i}, I_t) \cdot \frac{V_i}{V_0} \qquad (12)$$

où $NN(I_{t-\Delta_i}, I_t)$ représente la nouvelle carte intermédiaire 30 issue du réseau de neurones 28 pour la paire d'images successives $(I_{t-\Delta i}, I_t)$,
$V_i$ représente la vitesse du capteur 12 lors de cette nouvelle prise d'images, et
$V_0$ représente la vitesse de référence utilisée lors de l'apprentissage du réseau de neurone 28.

L'équation (12) précitée s'écrit également sous la forme :

$$\varsigma_i(t) = \alpha' \cdot \gamma(I_{t-\Delta_i}, I_t) \cdot V_i \qquad (13)$$

où $\alpha'$ est le paramètre sans dimension défini par l'équation (11) précitée,
$V_i$ représente la vitesse du capteur 12 lors de cette nouvelle prise d'images, et
$\gamma(I_{t-\Delta i}, I_t)$ vérifie l'équation suivante :

$$\gamma(I_{t-\Delta_i}, I_t) = \frac{NN(I_{t-\Delta_i}, I_t)}{V_{max}} \qquad (14)$$

avec $NN(I_{t-\Delta_i}, I_t)$ représentant la nouvelle carte intermédiaire 30 issue du réseau de neurones 28 pour la paire d'images successives $(I_{t-\Delta i}, I_t)$ et $V_{max}$ représentant la vitesse maximale du capteur 12.

Le réseau de neurones 28 comporte une pluralité de neurones artificiels 46 organisés en couches successives 48, 50, 52, 54, à savoir une couche d'entrée 48 correspondant à la ou aux variables d'entrée 32, une couche de sortie 50 correspondant à la ou aux variables de sortie 34, et d'éventuelles couches intermédiaires 52, 54, également appelées couches cachées et disposées entre la couche d'entrée 48 et la couche de sortie 50, comme représenté sur la figure 2. Une fonction d'activation caractérisant chaque neurone artificiel 46 est, par exemple, une fonction non linéaire par exemple de type ReLU (de l'anglais *Rectified Linear Unit*). Les valeurs initiales de poids synaptiques sont, par exemple, fixées aléatoirement ou pseudo-aléatoirement.

Le réseau de neurones artificiels 28 est notamment un réseau de neurones convolutionnel. Le réseau de neurones artificiels 28 comporte, par exemple, des neurones artificiels 46 agencés en couches de traitement successives.

Le réseau de neurones artificiels 28 comporte un ou plusieurs noyaux de convolution. Un noyau de convolution analyse une caractéristique de l'image pour obtenir, à partir de l'image d'origine, une nouvelle caractéristique de l'image à une couche donnée, cette nouvelle caractéristique de l'image étant également appelée canal (de l'anglais *channel,* aussi connu en anglais sous la terminologie *feature map*). L'ensemble des canaux forment une couche de traitement convolutif, correspondant en fait à un volume, souvent appelé volume de sortie, et le volume de sortie est assimilable à une image intermédiaire.

Le réseau de neurones artificiels 28 comporte un ou plusieurs noyaux de déconvolution disposés entre les noyaux de convolution et la ou les variables de sortie 34.

L'apprentissage du réseau de neurones 28 est supervisé. Il utilise alors, par exemple, un algorithme de rétropropagation du gradient d'erreur, tel qu'un algorithme fondé sur la minimisation d'un critère d'erreur en utilisant une méthode dite de descente du gradient.

L'apprentissage supervisé du réseau de neurones 28 est effectué en lui fournissant en variable(s) d'entrée 32 une ou plusieurs paire(s) d'images $I_{t-\Delta t}$, $I_t$ acquise(s) et en variable(s) de sortie 34 de référence une ou plusieurs carte(s) intermédiaire(s) 30 correspondante(s), avec les valeurs de profondeur attendues pour la ou les paires d'images $I_{t-\Delta t}$, $I_t$ acquise(s) fournie(s) en variable(s) d'entrée 32.

L'apprentissage du réseau de neurones 28 est de préférence effectué avec un écart temporel prédéfini $\Delta_0$ entre deux prises d'image successives. Cet écart temporel correspond typiquement à la période temporelle entre deux prises d'image du capteur 12 fonctionnant en mode vidéo, ou inversement à la fréquence correspondante. Suivant le capteur 12, la prise d'images varie par exemple entre 25 images par seconde et 60 images par seconde, voire 120 images par secondes. L'écart temporel prédéfini $\Delta_0$ est alors compris entre 40 ms et 16 ms, voire 8 ms.

Lors de l'apprentissage du réseau de neurone 28, la vitesse du capteur 12 étant supposée constante entre deux prises d'image et égale à $V_0$, dite aussi vitesse de référence, l'écart temporel prédéfini $\Delta_0$ correspond à un déplacement prédéfini $D_0$ du capteur 12, également appelé déplacement de référence.

La paire d'images $I_{t-\Delta t}$, $I_t$ acquise, fournie en tant que variable d'entrée 32 au réseau de neurones 28, présente de préférence des dimensions inférieures ou égales à 512 pixels x 512 pixels.

Le module de génération 36 est configuré pour générer la carte de profondeur 16 à partir de l'au moins une carte intermédiaire calculée 30 ou à partir de la carte intermédiaire fusionnée 45, ladite carte intermédiaire fusionnée 45 résultant elle-même de cartes intermédiaires calculées 30.

Le module de génération 36 est de préférence configuré pour générer la carte de profondeur 16 en appliquant un facteur correctif d'échelle à la ou chaque carte intermédiaire 30 calculée, ou bien à la carte intermédiaire fusionnée 45 le cas échéant. Le facteur correctif d'échelle dépend d'un ratio entre l'écart temporel $\Delta t$ entre les images de la paire acquise à partir de laquelle la carte intermédiaire 30 a été calculée et l'écart temporel prédéfini $\Delta_0$, utilisé pour l'apprentissage préalable du réseau de neurones 28.

Lorsque la vitesse du capteur 12 est en outre supposée constante entre deux prises d'image, le facteur correctif d'échelle dépend, de manière analogue, d'un ratio entre le déplacement $D(t,\Delta t)$ du capteur 12 entre les deux prises d'image pour la paire acquise à partir de laquelle la carte intermédiaire 30 a été calculée et le déplacement prédéfini $D_0$, utilisé pour l'apprentissage préalable du réseau de neurones 28.

Le facteur correctif d'échelle est alors égal à $D(t,\Delta t)/ D_0$, et la carte de profondeur corrigée vérifie par exemple l'équation suivante :

$$\varsigma(t) = NN(I_{t-\Delta t}, I_t) \cdot \frac{D(t,\Delta t)}{D_0} \qquad (15)$$

où $NN(I_{t-\Delta t}, I_t)$ représente la carte intermédiaire 30 issue du réseau de neurones 28 pour la paire d'images successives $(I_{t-\Delta t}, I_t)$,

$D(t,\Delta t)$ représente ledit déplacement du capteur 12 entre les deux prises d'image, et
$D_0$ représente le déplacement de référence précité.

Ledit déplacement $D(t,\Delta t)$ vérifie par exemple l'équation suivante :

$$D(t,\Delta t) = \left\| \int_{t-\Delta t}^{t} V(\tau) \cdot d\tau \right\| \qquad (16)$$

où V représente la vitesse du capteur 12 entre les instants temporels t-$\Delta t$ et t.

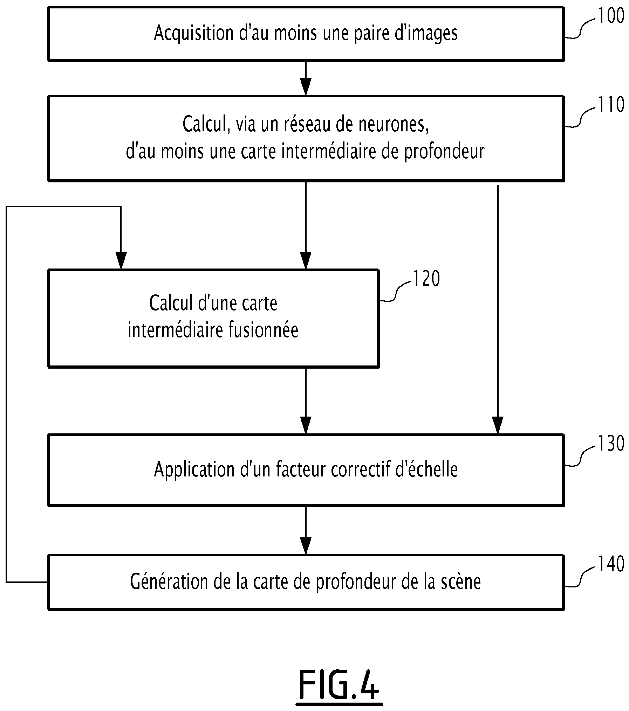

Le fonctionnement du drone 10 selon l'invention, en particulier de son dispositif électronique de génération 14, va être à présent décrit à l'aide de la figure 4 illustrant un organigramme du procédé de détermination selon l'invention, mis en oeuvre par ordinateur.

Lors d'une étape initiale 100, le dispositif électronique de génération 14 acquiert, via son module d'acquisition 24, au moins une paire d'images successives de la scène S parmi les différentes images prises par le capteur d'images 12.

Le dispositif électronique de génération 14 calcule ensuite, lors de l'étape suivante 110 et via son module de calcul 26, en particulier via son réseau de neurones 28, au moins une carte intermédiaire de profondeur 30, le réseau de neurones 28 recevant, comme indiqué précédemment, chaque paire d'images successives acquise en l'une de ses variables d'entrée 32 et délivrant la carte intermédiaire 30 calculée à partir de ladite paire d'images acquises en l'une respective de ses variables de sortie 34.

En complément facultatif, le dispositif électronique de génération 14 calcule, via son module de calcul 26 et lors d'une étape suivante optionnelle 120, la carte intermédiaire fusionnée 45 en effectuant la somme pondérée d'au moins deux cartes intermédiaires 30 calculées pour la même scène S, les cartes intermédiaires calculées 30 ayant des moyennes respectives de valeurs indicatives de profondeur qui sont distinctes d'une carte intermédiaire à l'autre.

Le calcul de la carte intermédiaire fusionnée 45 avec ladite somme pondérée est par exemple effectué à l'aide du bloc FUSION de la figure 3 et suivant les équations (8) à (10) décrites précédemment.

Pour la détermination des différentes cartes intermédiaires 30 destinées à être fusionné, le module de calcul de 36 effectue en outre, selon un complément facultatif et par exemple à l'aide du bloc K m, le partitionnement en k-moyennes sur la carte intermédiaire 30 précédemment calculée, afin de déterminer n moyennes respectives distinctes souhaitées pour le calcul ultérieur de n cartes intermédiaires 30. Les n moyennes respectives distinctes souhaitées, telles que les n centroïdes $C_1$, ..., $C_n$, sont ensuite fournies aux blocs successifs $1/\overline{\beta}$, INT, représentés à la figure 3, pour recalculer les décalages temporels $\Delta_1$, ..., $\Delta_n$, ces décalages temporels $\Delta_1$, ..., $\Delta_n$ étant eux-mêmes fournis au module d'acquisition 24 pour une nouvelle d'acquisition de paires d'images successives $(I_{t-\Delta 1}, I_t)$, ..., $(I_{t-\Delta n}, I_t)$. Les n cartes intermédiaires 30 ultérieures sont alors calculées par le réseau de neurones 28 pour être ensuite transmises au bloc FUSION en vue du calcul de la carte intermédiaire fusionnée 45.

En complément facultatif, le dispositif électronique de génération 14 calcule, via son module de génération 36 et lors de l'étape suivante optionnelle 130, un facteur correctif d'échelle à appliquer directement à la carte intermédiaire 30 calculée par le réseau de neurones 28, ou bien à la carte intermédiaire fusionnée 45. L'application du facteur correctif d'échelle vérifie par exemple les équations (15) et (16) décrites précédemment, et permet de corriger la carte intermédiaire en fonction d'un éventuel décalage entre l'écart temporel prédéfini $\Delta_0$, utilisé pour l'apprentissage préalable du réseau de neurones 28, et l'écart temporel $\Delta t$ entre les images de la paire acquise, à partir de laquelle la carte intermédiaire 30 a été calculée.

Le dispositif électronique de génération 14 génère enfin, lors de l'étape 140 et via son module de génération 36, la carte de profondeur 16 de la scène S.

L'homme du métier comprendra que lorsque les étapes optionnelles 120 et 130 de calcul de la carte fusionnée 45 et respectivement d'application du facteur correctif d'échelle ne sont pas mises en oeuvre et que le dispositif électronique de génération 14 passe directement de l'étape 110 à l'étape 140, la carte de profondeur 16 est générée directement à partir de la carte intermédiaire 30 issue du réseau de neurones 28. Autrement dit, la carte de profondeur 16 générée par le module de génération 34 est alors identique à la carte intermédiaire 30 issue du réseau de neurones 28 du module de calcul.

Le dispositif électronique de génération 14 permet alors de fournir une carte de profondeur 16 de la scène S avec une bonne précision et rapidement de par l'utilisation du réseau de neurones 28. L'erreur moyenne de profondeur entre la profondeur ainsi estimée et la profondeur réelle est de faible valeur.

A titre d'exemple, sur la figure 5 représentant une courbe d'évolution de l'erreur moyenne de profondeur, exprimée en mètre, en fonction de la distance, à partir du foyer d'extension, également appelé FOE (de l'anglais *Focus Of Expansion*), dans la carte de profondeur, exprimée en pixels, l'erreur moyenne est presque systématiquement inférieure à 3,5 m, hormis la valeur isolée d'erreur moyenne sensiblement égale à 4,6 m pour une très faible distance dans la carte de profondeur. L'erreur moyenne est même généralement sensiblement égale à 3 m.

Cette bonne précision de la détermination de la carte de profondeur 16 par le dispositif électronique de génération 14 est également visible sur les figures 6 à 9 illustrant les résultats obtenus par le dispositif électronique de génération 14 selon l'invention en comparaison avec un calcul de référence de la carte de profondeur de la scène. La figure 6 représente une image réelle de la scène S, la figure 7 représente la carte de profondeur, notée REF, obtenue avec le calcul de référence, et la figure 8 représente la carte de profondeur 16 obtenue avec le dispositif de génération 14 selon l'invention. La figure 9 représentant les erreurs de profondeur entre la carte de profondeur 16 obtenue avec le dispositif de génération 14 et la carte de profondeur REF obtenue avec le calcul de référence, confirme alors cette bonne précision avec de faibles erreurs de profondeur.

Sur la figure 9, le niveau de gris moyen correspondant à une couleur verte initiale représente une absence d'erreur ; le niveau de gris élevé, c'est-à-dire un niveau de gris clair, correspondant à une couleur rouge initiale représente une surestimation de la profondeur ; et le niveau de gris faible, c'est-à-dire un niveau de gris sombre, correspondant à une couleur bleue initiale représente une sous-estimation de la profondeur. L'homme du métier observera alors que la grande majorité de la figure 9 correspond à des zones de gris moyen, c'est-à-dire des zones avec une absence d'erreur de profondeur.

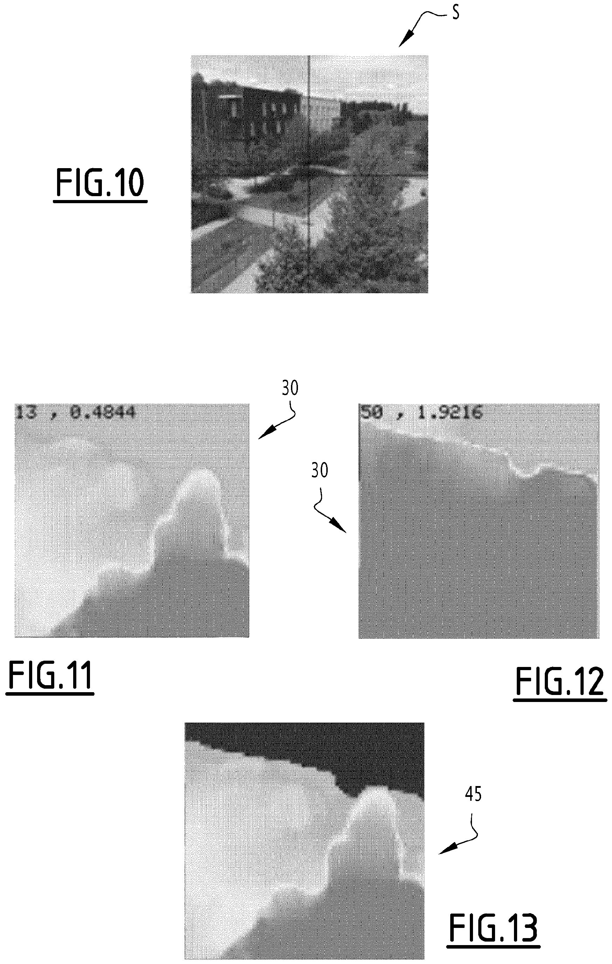

Lorsqu'en complément facultatif, le dispositif électronique de génération 14 calcule en outre la carte intermédiaire fusionnée 45 en effectuant la somme pondérée d'au moins deux cartes intermédiaires 30 calculées pour la même scène S, la carte de profondeur 16 ainsi obtenue présente une plus large plage de valeurs de profondeur, ainsi qu'illustré sur les figures 10 à 13.

La figure 10 représente une image réelle de la scène S ; la figure 11 représente une première carte intermédiaire de profondeur 30 ayant une moyenne de valeurs de profondeur sensiblement égale à 13 m, la plage de valeurs de profondeur étant typiquement comprise entre 0 et 50 m ; et la figure 12 représente une deuxième carte intermédiaire de profondeur 30 ayant une moyenne de valeurs de profondeur sensiblement égale à 50 m, la plage de valeurs de profondeur étant typiquement comprise entre 50 et 100 m.

La figure 13 représente alors la carte intermédiaire fusionnée 45 résultant de la fusion des première et deuxième cartes intermédiaires de profondeur 30, visibles sur les figures 11 et 12. La carte de profondeur 16 générée par le dispositif électronique de génération 14 à partir de la carte intermédiaire fusionnée 45 présente alors une plus large plage de valeurs de profondeur, typiquement comprise entre 0 et 100 m.

L'homme du métier comprendra donc que le dispositif électronique de génération 14 selon l'invention permet alors au drone 10 d'effectuer une détection plus efficace d'obstacles.

On conçoit ainsi que le dispositif électronique de génération 14 selon l'invention et le procédé de génération associé permettent de générer plus efficacement la carte de profondeur 16 de la scène S, à partir d'au moins une paire d'images successives $I_{t-\Delta t}$, $I_t$ de la scène S.

## Revendications

1. Dispositif électronique de génération (14), à partir d'au moins une paire d'images successives ($I_{t-\Delta t}$, $I_t$) d'une scène (S) comportant un ensemble d'objet(s), d'une carte de profondeur de la scène (S), le dispositif (14) comprenant :

   - un module d'acquisition (24) configuré pour acquérir au moins une paire d'images successives ($I_{t-\Delta t}$, $I_t$), prises par un capteur d'images (12), de la scène (S) comportant l'ensemble d'objet(s),
   - un module de calcul (26) configuré pour calculer via un réseau de neurones (28) au moins une carte intermédiaire de profondeur (30), chaque carte intermédiaire (30) étant calculée pour une paire respective d'images ($I_{t-\Delta t}$, $I_t$) acquise et présentant une valeur indicative d'une profondeur pour chaque objet de la scène (S), la profondeur étant la distance entre le capteur (12) et un plan passant par l'objet respectif, parallèle à un plan de référence du capteur (12), une variable d'entrée (32) du réseau de neurones (28) étant la paire d'images ($I_{t-\Delta t}$, $I_t$) acquise, une variable de sortie (34) du réseau de neurones (28) étant la carte intermédiaire (30),
   - un module de génération (36) configuré pour générer la carte de profondeur (16) de la scène (S) à partir d'au moins une carte intermédiaire (30) calculée, la carte de profondeur (16) comportant un ensemble d'élément(s), chaque élément étant associé à un objet et ayant une valeur dépendant de la profondeur entre le capteur (12) et ledit objet.

2. Dispositif (14) selon la revendication 1, dans lequel le module de calcul (26) est configuré pour calculer au moins deux cartes intermédiaires (30) pour la même scène (S).

3. Dispositif (14) selon la revendication 2, dans lequel le module de calcul (26) est configuré en outre pour modifier une moyenne des valeurs indicatives de profondeur entre des première et deuxième cartes intermédiaires (30), calculées respectivement pour des première et deuxième paires d'images acquises, en sélectionnant la deuxième paire avec un écart temporel entre les images modifié par rapport à celui de la première paire.

4. Dispositif (14) selon les revendications 2 et 3, dans lequel le module de calcul (26) est configuré pour calculer au moins deux cartes intermédiaires (30) pour la même scène (S), les cartes intermédiaires calculées (30) ayant des moyennes respectives de valeurs indicatives de profondeur qui sont distinctes d'une carte intermédiaire à l'autre, et en outre pour calculer une carte intermédiaire fusionnée (45) en effectuant une somme pondérée des cartes intermédiaires calculées, et
   le module de génération (36) est configuré pour générer la carte de profondeur (16) à partir de la carte intermédiaire fusionnée (45).

5. Dispositif (14) selon la revendication 4, dans lequel le module de calcul (26) est configuré pour effectuer un partitionnement en k-moyennes sur une carte intermédiaire calculée (30), afin de déterminer n moyennes respectives distinctes souhaitées pour un calcul ultérieur de n cartes intermédiaires, n étant un entier supérieur ou égal à 2.

6. Dispositif (14) selon l'une quelconque des revendications précédentes, dans lequel le module de génération (36) est configuré pour générer la carte de profondeur (16) en appliquant un facteur correctif d'échelle à la ou chaque carte intermédiaire calculée (30), le facteur correctif d'échelle dépendant d'un ratio entre l'écart temporel ($\Delta t$) entre les images de la paire acquise pour laquelle la carte intermédiaire a été calculée et un écart temporel prédéfini ($\Delta_0$), utilisé pour un apprentissage préalable du réseau de neurones (28).

**7.** Dispositif (14) selon l'une quelconque des revendications précédentes, dans lequel chaque élément de la carte de profondeur (16, 30, 45) est un pixel, et chaque objet est l'entité de la scène (S) correspondant au pixel de l'image prise.

**8.** Dispositif (14) selon l'une quelconque des revendications précédentes, dans lequel le capteur d'image (12) s'étend suivant un plan d'extension, et le plan de référence est un plan parallèle au plan d'extension, tel qu'un plan confondu avec le plan d'extension.

**9.** Drone (10), comprenant :

- un capteur d'images (12) configuré pour prendre au moins une paire d'images successives ($I_{t-\Delta t}$, $I_t$) d'une scène (S) comportant un ensemble d'objet(s),
- un dispositif électronique de génération (14) configuré pour générer une carte de profondeur (16) de la scène (S), à partir de l'au moins une paire d'images successives ($I_{t-\Delta t}$, $I_t$) de la scène (S) prises par le capteur (12),

**caractérisé en ce que** le dispositif électronique de génération (14) est conforme à l'une quelconque des revendications précédentes.

**10.** Procédé de génération, à partir d'au moins une paire d'images successives ($I_{t-\Delta t}$, $I_t$) d'une scène (S) comportant un ensemble d'objet(s), d'une carte de profondeur (16) de la scène (S),

le procédé étant mis en oeuvre par un dispositif électronique de génération (14), et comprenant :

- l'acquisition (100) d'au moins une paire d'images successives ($I_{t-\Delta t}$, $I_t$), prises par un capteur d'images (12), de la scène (S) comportant l'ensemble d'objet(s),
- le calcul (110) via un réseau de neurones (28) d'au moins une carte intermédiaire de profondeur (30), chaque carte intermédiaire (30) étant calculée pour une paire respective d'images ($I_{t-\Delta t}$, $I_t$) acquise et présentant une valeur indicative d'une profondeur pour chaque objet de la scène (S), la profondeur étant la distance entre le capteur (12) et un plan passant par l'objet respectif parallèlement à un plan de référence du capteur (12), une variable d'entrée (32) du réseau de neurones (28) étant la paire d'images ($I_{t-\Delta t}$, $I_t$) acquise, une variable de sortie (34) du réseau de neurones (28) étant la carte intermédiaire (30), et
- la génération (140) de la carte de profondeur (16) de la scène (S) à partir d'au moins une carte intermédiaire (30) calculée, la carte de profondeur (16) comportant un ensemble d'élément(s), chaque élément étant associé à un objet et ayant une valeur dépendant de la profondeur entre le capteur (12) et ledit objet.

**11.** Programme d'ordinateur comportant des instructions logicielles qui, lorsqu'elles sont exécutées par un ordinateur, mettent en oeuvre un procédé selon la revendication précédente.

FIG.1

## FIG.2

## FIG.3

Acquisition d'au moins une paire d'images — 100

Calcul, via un réseau de neurones,
d'au moins une carte intermédiaire de profondeur — 110

Calcul d'une carte
intermédiaire fusionnée — 120

Application d'un facteur correctif d'échelle — 130

Génération de la carte de profondeur de la scène — 140

## FIG.4

Distance à partir du foyer d'expansion (FOE) dans
la carte de profondeur (pixels)

FIG.5

FIG.6

FIG.9

FIG.7

FIG.8

FIG.10

FIG.11

FIG.12

FIG.13

Europäisches
Patentamt

European
Patent Office

Office européen
des brevets

**RAPPORT DE RECHERCHE EUROPEENNE**

Numéro de la demande

EP 18 18 5552

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | UMMENHOFER BENJAMIN ET AL: "DeMoN: Depth and Motion Network for Learning Monocular Stereo", IEEE COMPUTER SOCIETY CONFERENCE ON COMPUTER VISION AND PATTERN RECOGNITION. PROCEEDINGS, IEEE COMPUTER SOCIETY, US, 21 juillet 2017 (2017-07-21), pages 5622-5631, XP033249922, ISSN: 1063-6919, DOI: 10.1109/CVPR.2017.596 [extrait le 2017-11-06] * abrégé; figures 1-4, 6 * * page 1648, alinéa 2 - alinéa 3 * * "Network Architecture"; page 1649 - page 1650 * ----- | 1-11 | INV. G06T7/579 |
| A | ILG EDDY ET AL: "FlowNet 2.0: Evolution of Optical Flow Estimation with Deep Networks", IEEE COMPUTER SOCIETY CONFERENCE ON COMPUTER VISION AND PATTERN RECOGNITION. PROCEEDINGS, IEEE COMPUTER SOCIETY, US, 21 juillet 2017 (2017-07-21), pages 1647-1655, XP033249505, ISSN: 1063-6919, DOI: 10.1109/CVPR.2017.179 [extrait le 2017-11-06] * le document en entier * ----- | 1-11 | DOMAINES TECHNIQUES RECHERCHES (IPC) G06T |
| A | DOSOVITSKIY ALEXEY ET AL: "FlowNet: Learning Optical Flow with Convolutional Networks", 2015 IEEE INTERNATIONAL CONFERENCE ON COMPUTER VISION (ICCV), IEEE, 7 décembre 2015 (2015-12-07), pages 2758-2766, XP032866621, DOI: 10.1109/ICCV.2015.316 * le document en entier * ----- -/-- | 1-11 | |

Le présent rapport a été établi pour toutes les revendications

| Lieu de la recherche | Date d'achèvement de la recherche | Examinateur |
|---|---|---|
| Munich | 17 octobre 2018 | Rodes Arnau, Isabel |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 18 18 5552

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | HAO JIANG ET AL: "A Novel Depth Map Generation Method Based on K-Means Clustering and Depth Pattern Recognition", INTERNET OF THINGS (ITHINGS/CPSCOM), 2011 INTERNATIONAL CONFERENCE ON AND 4TH INTERNATIONAL CONFERENCE ON CYBER, PHYSICAL AND SOCIAL COMPUTING, IEEE, 19 octobre 2011 (2011-10-19), pages 638-643, XP032107061, DOI: 10.1109/ITHINGS/CPSCOM.2011.31 ISBN: 978-1-4577-1976-9 * le document en entier * * "Proposed System"; page 639 - page 641; figures 4, 6 * ----- | 4,5 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 17 octobre 2018 | Rodes Arnau, Isabel |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)